(19) Europäisches Patentamt / European Patent Office / Office européen des brevets

(11) **EP 4 702 831 A1**

(12) **EUROPÄISCHE PATENTANMELDUNG**

(43) Veröffentlichungstag:
04.03.2026 Patentblatt 2026/10

(21) Anmeldenummer: 25187272.7

(22) Anmeldetag: 03.07.2025

(51) Internationale Patentklassifikation (IPC):
*A01D 41/127* (2006.01)

(52) Gemeinsame Patentklassifikation (CPC):
A01D 41/1273

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: 28.08.2024 DE 102024124584

(71) Anmelder: CLAAS Selbstfahrende
Erntemaschinen GmbH
33428 Harsewinkel (DE)

(72) Erfinder:
• **Barther, Marvin**
**33803 Steinhagen (DE)**
• **Neufeld, Sergej**
**33098 Paderborn (DE)**
• **Thiesmann, Waldemar**
**49080 Osnabrück (DE)**
• **Högemeier, Christoph**
**49082 Osnabrück (DE)**
• **Witte, Johann**
**58730 Fröndenberg (DE)**

(74) Vertreter: CLAAS Gruppe
Mühlenwinkel 1
33428 Harsewinkel (DE)

(54) **VERFAHREN ZUM BESTIMMEN EINES VERLUSTS EINER ERNTEMASCHINE UND ERNTEMASCHINE**

(57) Die vorliegende Erfindung betrifft ein Verfahren (100) zum Bestimmen eines Verlusts einer Erntemaschine (200), wobei die Erntemaschine (200) ein Abscheideorgan (225) umfasst, das Verfahren umfassend: Bestimmen einer Erntegutflusslinie (300) im Abscheideorgan (225), wobei Erntegut abschnittsweise entlang der Erntegutflusslinie (300) abscheidbar ist, Bereitstellen einer Abscheidefunktion (600) mit Koeffizienten basierend auf der Erntegutflusslinie (300), Erfassen von Messwerten (M) im Abscheideorgan (225), Ermitteln der Koeffizienten der Abscheidefunktion (600) zumindest teilweise basierend auf den Messwerten (M), und Bestimmen des Verlusts mittels der Abscheidefunktion (600). Die vorliegende Erfindung betrifft ferner eine Erntemaschine (200).

Bestimmen einer Erntegutflusslinie im Abscheideorgan, wobei Erntegut abschnittsweise entlang der Erntegutflusslinie abscheidbar ist, wobei der Erntegutflusslinie optional aus einer im Wesentlichen helixförmigen Bewegung eines mittels des Rotors geförderten Erntegutstroms ermittelt wird — S1

Bereitstellen einer Abscheidefunktion mit Koeffizienten basierend auf der Erntegutflusslinie — S2

Erfassen von Messwerten im Abscheideorgan — S3

Ermitteln der Koeffizienten der Abscheidefunktion zumindest teilweise basierend auf den Messwerten — S4

Bestimmen einer Haufwerkfunktion als eine Randbedingung der Abscheidefunktion — S5

Bestimmen des Verlusts mittels der Abscheidefunktion, umfassend:
Erweitern der Abscheidefunktion über einen vom Abscheideorgan definierten Bereich hinaus, und Ermitteln eines Verlustwerts mittels des erweiterten Bereichs der Abscheidefunktion. — S6

Fig. 1

EP 4 702 831 A1

**Beschreibung**

Die vorliegende Erfindung betrifft ein Verfahren zum Bestimmen eines Verlusts einer Erntemaschine. Ferner betrifft die vorliegende Erfindung eine Erntemaschine.

Aus dem Stand der Technik ist es bekannt Verluste einer Erntemaschine mittels Kennlinien zu bestimmen.

Die EP 1 321 023 B1 schlägt hierfür ein Verfahren zur Bestimmung des Verlusts einer Erntemaschine vor, wobei den Abscheideorganen in ihrem erntegutabscheidenden Bereich zumindest ein Abscheidesensor zur Generierung zumindest eines der abgeschiedenen Erntegutmenge adäquaten Signals zugeordnet ist und dieses zumindest ein Signal zur Weiterverarbeitung einer Auswerteinheit zugeführt wird, und wobei der erntegutabscheidende Bereich der Abscheideorgane in Abscheidezonen unterteilt ist, der Abscheideverlauf zumindest eines Teils der Abscheidezonen ermittelt und zu einer Kenngröße verrechnet wird und für diese ermittelte Kenngröße in der Auswerteinheit zumindest eine Kennlinie hinterlegt ist aus der sich der der ermittelten Kenngröße entsprechende Verlust ergibt.

Eine Aufgabe der vorliegenden Erfindung ist es, Verfahren und Erntemaschine derart weiterzuentwickeln, dass die Genauigkeit eines bestimmten Verlusts verbessert wird.

Diese Aufgabe wird durch die hier offenbarten Ausführungsformen gelöst, die insbesondere durch den Gegenstand der unabhängigen Ansprüche definiert sind. Die abhängigen Ansprüche betreffen weitere Ausführungsformen. Verschiedene Aspekte und Ausführungsformen dieser Aspekte sind auch in der nachstehenden Zusammenfassung und Beschreibung offenbart, die zusätzliche Merkmale und Vorteile bieten.

Ein Aspekt bezieht sich auf ein Verfahren zum Bestimmen eines Verlusts einer Erntemaschine. Die Erntemaschine kann dabei ein Abscheideorgan umfassen. Das Verfahren kann ein Bestimmen einer Erntegutflusslinie im Abscheideorgan umfassen. Dabei kann Erntegut abschnittsweise entlang der Erntegutflusslinie abscheidbar sein. Des Weiteren kann das Verfahren ein Bereitstellen einer Abscheidefunktion mit Koeffizienten basierend auf der Erntegutflusslinie umfassen. Das Verfahren kann ferner ein Erfassen von Messwerten im Abscheideorgan umfassen. Das Verfahren kann ein Ermitteln der Koeffizienten der Abscheidefunktion zumindest teilweise basierend auf den Messwerten umfassen. Des Weiteren kann das Verfahren ein Bestimmen des Verlusts mittels der Abscheidefunktion umfassen.

Eine Erntemaschine kann eine landwirtschaftliche Arbeitsmaschine sein, die speziell für die Ernte von Nutzpflanzen vorgesehen ist. Es kann sich bei der Erntemaschine insbesondere um einen Mähdrescher mit einem Abscheideorgan handeln. Das Abscheideorgan kann zur Abscheidung von Erntegut eingerichtet sein. Im Abscheideorgan können Körner und nicht vollständig ausgedroschene Ähren vom Stroh getrennt werden. Das Abscheideorgan kann das Erntegut auch zumindest teilweise dreschen. Das Abscheideorgan kann ein Korbsegment (auch Korbbereich genannt) zur Abscheidung von Bestandteilen aus dem Erntegut aufweisen. Das Korbsegment bzw. der Korbbereich kann als Blechkorb, Drahtkorb oder Fingerkorb ausgebildet sein. Der Verlust der Erntemaschine kann sich auf eine Menge an Erntegut beziehen, die während des Einsatzes der Erntemaschine ungenutzt bleibt, beschädigt wird oder auf andere Weise verloren geht. Es kann sich bei dem Verlust insbesondere um einen Kornverlust handeln. Dabei kann es sein, dass der Verlust bzw. Kornverlust während der Abscheidung von Erntegut im Abscheideorgan entsteht.

Unter Abscheidung von Erntegut kann ein Abscheiden von Korn und Nicht-Kornbestandteilen, insbesondere Spreu und Stroh, des Erntegutes voneinander verstanden werden. Die Abscheidung mittels des Korbsegments kann insbesondere beim Abscheiden im Abscheideorgan erfolgen. Im Abscheideorgan können die Prozesse Entmischung und Trennung stattfinden. Entmischung kann auftreten, wenn sich die unterschiedlichen Bestandteile aufgrund ihrer physikalischen Eigenschaften während der Abscheidung im Abscheideorgan unterschiedlich verhalten. Zum Beispiel können schwerere Partikel schneller absinken, während leichtere Partikel weiter oben verbleiben. Entmischung kann ferner beschreiben, wie sich verschiedene Partikel aufgrund ihrer unterschiedlichen Eigenschaften auf dem Korbsegment anordnen oder ansammeln. Die Trennung kann sich auf einen Prozess beziehen, bei dem im Abscheideorgan Bestandteile des Ernteguts mittels des Korbsegments getrennt werden. Das abgeschiedene Erntegut kann nach der Abscheidung das Abscheideorgan verlassen und beispielsweise in einem Korntank gesammelt werden. Die Erntemaschine kann mindestens ein Abscheideorgan aufweisen. Es ist auch möglich, dass die Erntemaschine mehrere Abscheideorgane aufweist.

Die Erntegutflusslinie kann den Weg oder die Route bezeichnen, die das Erntegut im Abscheideorgan durchläuft. Die Erntegutflusslinie kann ein Bereich sein, entlang dem Erntegut fließen kann. Die Erntegutflusslinie kann den gesamten Transportprozess des Ernteguts durch die verschiedenen mechanischen Komponenten des Abscheideorgans beschreiben. Es kann sich bei der Erntegutflusslinie mit anderen Worten um eine Linie handeln, auf dem sich der größte Teil des Ernteguts oder ein Schwerpunkt des Erntegutflusses bewegt. Die Erntegutflusslinie kann bestimmt werden, indem beispielsweise ein Eintritt des Ernteguts in das Abscheideorgan ermittelt wird und der weitere Verlauf des Erntegutflusses basierend auf den geometrischen und mechanischen Bedingungen im Abscheideorgan projiziert wird. Beispielsweise kann mittels der Geschwindigkeit und der Masse des Ernteguts beim Eintreten in das Abscheideorgan bestimmt werden, welche mechanischen Kräfte auf das Erntegut im weiteren Verlauf durch das Abscheideorgan auftreten. Somit kann ferner bestimmt werden, an welchen geometrischen Punkten sich das Erntegut bzw. ein Großteil des Ernteguts im Abscheideorgan zu bestimmten Zeitpunkten befinden wird. Basierend auf diesen geometrischen Punkten kann eine Projektionslinie bzw. eine Erntegutflusslinie ermittelt werden.

Die Abscheidung entlang der Erntegutflusslinie kann abschnittsweise erfolgen. Dabei kann in bestimmten vordefinierten Abschnitten der Erntegutflusslinie, beispielsweise an einem Korbsegment, eine Abscheidung auftreten. Die Abscheidung in anderen Abschnitten der Erntegutflusslinie kann dagegen gehindert sein, weil nur eingeschränktes oder gar kein Abscheiden stattfinden kann. Beispielsweise kann es Bereiche des Abscheideorgans geben, an denen die Abscheidung aufgrund des Aufbaus des Abscheideorgans oder der mechanischen Bedingungen nicht stattfindet. Es kann beispielsweise sein, dass die Abscheidung in Bereichen des Abscheideorgans nicht stattfinden kann, weil in diesen Bereichen kein Korbsegment vorhanden ist. An diesen Stellen kann die Abscheidung als Null angenommen werden. Dabei kommt es an diesen Stellen möglicherweise lediglich zu einem Transport des Ernteguts und keiner weiteren Verarbeitung. Es kann sein, dass in diesen Bereichen eine Entmischung aber keine Trennung auftritt.

Die Abscheidefunktion kann ein mathematisches Modell oder eine mathematische Darstellung umfassen, die die Abscheidung (bspw. die Abscheideleistung oder die Menge an abgeschiedenem Erntegut) in Abhängigkeit vom Weg innerhalb eines Abscheidprozesses oder eines Abscheideorgans beschreibt. Mittels der Abscheidefunktion kann die Abscheidung an einer vorgegebenen Stelle bzw. Ort im Abscheideorgan bestimmt werden. Die Abscheidefunktion kann einen Abscheidewert, Abscheidegrad und/oder Abscheideverlauf beschreiben bzw. bestimmen. Es kann beispielsweise an jedem Punkt der Erntegutflusslinie ein Wert für die Abscheidung bestimmt werden und zusammenfassend somit ein Abscheideverlauf bestimmt werden.

Mittels der Abscheidefunktion kann die Abscheidung von Erntegut entlang der Erntegutflusslinie bestimmt werden, d.h. an jeder Stelle bzw. geometrischen Koordinate der Erntegutflusslinie kann das abgeschieden Erntegut bestimmt werden. Mit anderen Worten kann die Abscheidefunktion die Abscheidung von Erntegut in Abhängigkeit der Erntegutflusslinie beschreiben.

Messwerte können quantitative Daten sein, die das Erntegut betreffen und die mittels der Durchführung von Messungen im Abscheideorgan erfasst werden. Zum Beispiel kann ein Messwert eine spezifische Eigenschaft des Ernteguts beschreiben. Es kann sich beispielsweise um Größe, Masse, Feuchtigkeit oder die mechanischen Eigenschaften von Korn handeln. Zur Messung können beispielsweise Feuchtigkeitsmessungen, Kornzähler, Farbanalysen und/oder Dichtemessungen zum Einsatz kommen.

Das Ermitteln der Abscheidefunktion basierend auf den Messwerten kann bedeuten, dass die Abscheidefunktion in Form eines mathematischen Modells an experimentelle Daten (d.h. Messdaten) angepasst wird. Eine Möglichkeit ist dabei die Methode der kleinsten Fehlerquadrate. Dabei kann die Differenz zwischen den gemessenen und den mittels der Abscheidefunktion vorhergesagten Werten minimiert werden, um die beste Übereinstimmung zu erreichen. Dabei können Koeffizienten der Abscheidefunktion bestimmt werden, um die mathematische Beziehung zwischen verschiedenen Variablen und der Abscheideleistung zu beschreiben. Mit anderen Worten kann beim Ermitteln der Abscheidefunktion eine Identifikation bzw. Schätzung der Koeffizienten der Abscheidefunktion durchgeführt werden. Zum Ermitteln der Koeffizienten können stochastische Methoden, analytische Methoden und/oder maschinelles Lernen zum Einsatz kommen. Das Erfassen der Messwerte und das Ermitteln der Abscheidefunktion kann mittels einer Testvorrichtung oder an einem Prüfstand durchgeführt werden.

Mittels der Abscheidefunktion kann bestimmt werden, wie viel Menge an Erntegut im Abscheideorgan abgeschieden wurde. Bei dem abgeschiedenen Erntegut kann es sich um ein gewünschtes Produkt (bspw. Körner) handeln. Es ist möglich, dass das gesamte potenziell zu abscheidende Erntegut ermittelt wird. Basierend auf dem gesamten potenziell abzuscheidenden Erntegut und dem mittels Abscheidefunktion bestimmten abgeschiedenen Erntegut im Abscheideorgan kann ein Verlust des Abscheideorgans bestimmt werden. Mit anderen Worten kann beispielsweise die Differenz zwischen maximal möglicher Abscheidung und mittels Abscheidefunktion bestimmten Abscheidung ermittelt werden. Mittels der Differenz kann der Verlust des Abscheideorgans bestimmt werden. Das Bestimmen des Verlusts kann ferner basierend auf dem Abscheideverlauf ermittelt werden, wobei der Abscheideverlauf mittels der Abscheidefunktion bestimmt wird. Beispielsweise kann der Abscheideverlauf integriert werden, um das abgeschiedene Erntegut im Abscheideorgan zu bestimmen. Ein Abscheideverlauf von Erntegut kann entlang der Erntegutflusslinie mittels der Abscheidefunktion bestimmbar sein. Das Integral der Abscheidefunktion ab dem Abscheideende bis ins Unendliche kann dem Verlust bzw. den Kornverlusten entsprechen.

Das Verfahren ermöglicht mit anderen Worten die Kombination einer Erntegutflusslinie mit einer Abscheidefunktion. Dabei kann vorgesehen sein, dass die Abscheidefunktion in einer Dimension (bzw. eine Achse der Abscheidefunktion) entlang der Erntegutflusslinie verläuft. Ein Vorteil kann es sein, dass die Abscheidung mittels dieses Verfahrens besonders effizient und präzise bestimmt wird. Es ist ferner möglich, dass die Abscheidung an einem bestimmten geometrischen Punkt im dreidimensionalen Raum bestimmt werden kann. Somit kann vorteilhafterweise berücksichtigt werden, dass sich das Erntegut in verschiedene Richtungen im dreidimensionalen Raum bewegt.

In einem weiteren Aspekt kann die Erntegutflusslinie in Korbflussabschnitte und Mantelflussabschnitte unterteilt sein. Dabei kann entlang der Mantelflussabschnitte eine eingeschränkte Abscheidung von Erntegut vorgegeben werden.

Im Mantelflussabschnitt können andere Bedingungen (bspw. Reibung, Geschwindigkeit oder andere mechanische Einflüsse) für das Erntegut vorliegen. Dabei kann es sein, dass im Mantelflussabschnitt keine Abscheidung stattfindet. Beispielsweise kann das Abscheideorgan im Mantelflussabschnitt als geschlossen angenommen werden. Das könnte heißen, dass das Erntegut im Mantelflussabschnitt gefördert wird, jedoch keine Trennung stattfindet. Im Korbflussabschnitt kann dagegen eine Abscheidung stattfinden. Es kann sein, dass das Erntegut durch das Abscheideorgan gefördert wird und dabei abschnittsweise durch einen Korbflussabschnitt bewegt wird bzw. fließt. Eine Abscheidung von Erntegut kann dabei entlang der Korbflussabschnitte abschnittsweise mittels der Abscheidefunktion bestimmbar sein. Mit anderen Worten kann die Erntegutflusslinie Korbflussabschnitte und Mantelflussabschnitte umfassen, wobei die Abscheidefunktion die Abscheidung in Korbflussabschnitte bestimmt. In den Mantelflussabschnitten können dagegen andere Bedingungen vorliegen, beispielsweise keine oder eine eingeschränkte Trennung von Korn aus dem Erntegut.

Ein Vorteil der Unterteilung der Erntegutflusslinie in Korbflussabschnitte und Mantelflussabschnitte kann es sein, dass das Abscheiden und der Verlust der Abscheidung besonders genau ermittelt werden kann.

In einem weiteren Aspekt kann das Abscheideorgan in mehrere Abscheidezonen unterteilt sein. Ferner kann das Verfahren ein Erfassen von Messwerten in zumindest einer Abscheidezone des Abscheideorgans umfassen.

Mit anderen Worten kann das Abscheideorgan entlang einer Hauptachse aneinander anschließende Abscheidezonen aufweisen. Die Abscheidezonen können gleiche Breiten aufweisen. Die Abscheidung in den Abscheidezonen kann unterschiedliche Dimensionen aufweisen bzw. unterschiedlich stark ausfallen. Beispielsweise können aufgrund der mechanischen Bedingungen Abscheidezonen mit einer hohen Abscheidung oder Abscheidezonen mit einer niedrigen Abscheidung vorliegen. Das Erfassen von Messwerten kann beispielsweise in derjenigen Abscheidezone mit der maximalen Abscheidung stattfinden.

Ein Vorteil der Unterteilung in mehrere Abscheidezonen kann es sein, dass eine besonders vorteilhafte Abscheidezone für das Erfassen von Messwerten bestimmt werden kann. Beispielsweise kann eine Abscheidezone bestimmt werden, bei der ein besonders schnelles und/oder präzises Ermitteln der Abscheidefunktion basierend auf den in der Abscheidezone erfassten Messwerten stattfinden kann.

In einem weiteren Aspekt kann das Abscheideorgan einen Rotor umfassen. Ferner kann das Bestimmen der Erntegutflusslinie ein Ermitteln der Erntegutflusslinie aus einer im Wesentlichen helixförmigen Bewegung eines mittels des Rotors geförderten Erntegutstroms umfassen.

Die helixförmige Bewegung kann dabei eine Bewegung beschreiben, die entlang einer Spiralbahn verläuft. Eine Helix bzw. eine helixförmige Bewegung kann eine Kurve sein, die sich mit konstanter Steigung um den Mantel eines Zylinders windet. Die helixförmige Bewegung kann ähnlich der Form einer Schraube oder einer Feder sein. Dabei kann es sein, dass sich der Erntegutstrom gleichzeitig in zwei Richtungen bewegt. Der Erntegutstrom kann um eine Achse (bspw. die Hauptachse des Rotors) drehen und sich gleichzeitig entlang dieser Achse bewegen, wodurch eine dreidimensionale spiralförmige Bahn bzw. Erntegutflusslinie entsteht. Durch schnelle Rotation des Rotors kann das Korn ausgeschleudert und durch Fliehkräfte vom Stroh getrennt werden.

Ein Vorteil des Ermittelns aus einer im Wesentlichen helixförmigen Bewegung kann es sein, dass ein besonders genaues Bestimmen der Position bzw. Koordinaten des Ernteguts im Abscheideorgan stattfinden kann. Demnach kann die Abscheidung punktgenau bestimmt werden.

In einem weiteren Aspekt kann beim Ermitteln der Erntegutflusslinie berücksichtigt werden, dass sich der Erntegutstrom abschnittsweise im Wesentlichen orthogonal zu einer Hauptachse des Rotors bewegt.

Mit anderen Worten kann sich der Erntegutstrom mittels des Rotors beispielsweise im Korbbereich im Wesentlichen orthogonal zur Hauptachse des Rotors bewegen. Dabei kann es sein, dass das Erntegut im Korbbereich nicht entlang der Hauptachse des Rotors gefördert wird. Dabei kann es sein, dass sich das Erntegut im Wesentlichen radial bewegt und dabei eine Abscheidung stattfindet. Mit anderen Worten kann es sein, dass sich das Erntegut aufgrund der Abscheidung und den auftretenden mechanischen Kräften am Korb größtenteils radial bewegt.

In einem weiteren Aspekt kann die Abscheidefunktion Trennkoeffizienten und Verteilungswerte aufweisen. Dabei können die Verteilungswerte und die Trennkoeffizienten zumindest teilweise basierend auf den Messwerten ermittelt werden.

Mit anderen Worten können folgende Formeln hergeleitet werden:

$$R(s) = \frac{1}{B-A}(Be^{-As} - Ae^{-Bs})$$

$$Z(s) = \frac{\partial}{\partial s}\frac{1-R(s)}{s} = \frac{AB}{B-A}(e^{-As} - e^{-Bs})$$

Wobei s der Abscheideweg, R(s) die Restfunktion und Z(s) die Abscheidefunktion sein können. Der Abscheideweg kann dabei möglicherweise der Erntegutflusslinie entsprechen. Dabei können A und B Trennkoeffizienten.

In einem weiteren Aspekt kann das Bestimmen des Verlusts ein Erweitern der Abscheidefunktion über einen vom Abscheideorgan definierten Bereich hinaus umfassen. Ferner kann das Bestimmen des Verlusts ein Ermitteln eines Verlustwerts mittels des erweiterten Bereichs der Abscheidefunktion umfassen.

Mit anderen Worten kann die Abscheidefunktion über einen vom Abscheideorgan definierten Bereich extrapoliert werden. Ferner kann die Fläche unter der Abscheidefunktion mittels Integration bestimmt werden. Basierend auf der Fläche unter der Abscheidefunktion kann eine mögliche Abscheidung (d.h. das gesamte potenziell abzuscheidende Erntegut) bestimmt werden. Es kann ferner bestimmt werden, welche tatsächliche Abscheidung im Abscheideorgan stattfindet. Es kann ein Verlustwert des Abscheideorgans mittels der Differenz aus der möglichen Abscheidung und der tatsächlichen Abscheidung bestimmt werden.

Ein Vorteil eines derartigen Vorgehens kann es sein, dass der Verlust mittels mathematischer Methoden besonders präzise bestimmt werden kann. Es kann ferner eine Automatisierung der Bestimmung durchgeführt werden.

In einem weiteren Aspekt kann das Verfahren ein Bestimmen einer Haufwerkfunktion als eine Randbedingung der Abscheidefunktion umfassen.

Haufwerke können Gemische fester Partikel (granulare Materie) sein, die lose vermengt oder fest miteinander verpresst oder verbacken sind. Beispielsweise kann das Erntegut ein Haufwerk aus Stroh und Körnern sein. Die Haufwerkfunktion kann eine Masse an Haufwerk (bspw. Erntegut) beschreiben. Beispielsweise kann die Haufwerkfunktion verwendet werden, um eine Bedingung des Haufwerks am Eintritt (oder Austritt) des Abscheideorgans zu bestimmen. Es könnte beispielsweise bestimmt werden, welche Masse an Erntegut und welche Geschwindigkeit am Eintritt in das Abscheideorgan vorliegt.

Ein weiterer Aspekt bezieht sich auf eine Erntemaschine. Dabei kann die Erntemaschine ein Abscheideorgan umfassen. Ferner kann die Erntemaschine ein Sensorsystem zum Erfassen von Messwerten im Abscheideorgan umfassen. Des Weiteren kann die Erntemaschine eine Auswerteeinheit umfassen. Die Auswerteeinheit kann dazu vorgesehen und eingerichtet sein, eine Erntegutflusslinie im Abscheideorgan zu bestimmen, wobei Erntegut abschnittsweise entlang der Erntegutflusslinie abscheidbar ist, eine Abscheidefunktion mit Koeffizienten basierend auf der Erntegutflusslinie bereitzustellen, die Koeffizienten der Abscheidefunktion zumindest teilweise basierend auf den Messwerten zu ermitteln, und einen Verlust der Erntemaschine mittels der Abscheidefunktion zu bestimmen.

In einem weiteren Aspekt kann das Abscheideorgan einen Korbbereich und/oder einen Mantelbereich umfassen. Dabei kann die Erntegutflusslinie im Korbbereich in Korbflussabschnitte und im Mantelbereich in Mantelflussabschnitte unterteilt sein, wobei entlang der Mantelflussabschnitte eine eingeschränkte Abscheidung von Erntegut vorgegeben ist.

In einem weiteren Aspekt kann der Korbbereich 40 %, bevorzugt 30 %, besonders bevorzugt 20 %, einer Trennfläche des Abscheideorgans bilden.

Mit anderen Worten kann das Abscheideorgan einen Mantel umfassen, wobei der Mantel den Rotor umhüllt. Der Mantel kann eine Trennfläche umfassen. Der Korbbereich kann einen Teil der Trennfläche des Mantels bilden. Dabei kann der Korbbereich einen bestimmten Prozentsatz bzw. Anteil der Trennfläche des Mantels einnehmen. Mit anderen Worten kann das Abscheideorgan einen Mantel, der den Rotor umhüllt umfassen, wobei der Mantel eine Mantelfläche aufweist und die Mantelfläche einer Trennfläche entspricht. Durch die Mantelfläche bzw. Trennfläche kann das abzuscheidende Erntegut durchtreten bzw. getrennt werden. Der Mantel kann ferner einen Mantelumfang und eine Mantellänge aufweisen.

In einem weiteren Aspekt kann das Abscheideorgan in mehrere Abscheidezonen unterteilt sein. Dabei kann das Sensorsystem zum Erfassen von Messwerten einen Sensor in zumindest einer Abscheidezone aufweisen.

Ein möglicher Vorteil kann es sein, dass somit ein Messwert direkt mittels des Sensors erfasst wird und automatisch verarbeitet werden kann. Ferner ist es möglich, dass zumindest ein Sensor der Vielzahl von Sensoren jeweils einer Abscheidezone zugeordnet ist. Somit ist es möglich, dass Messwerte in jeder Abscheidezone erfasst werden. Die Abscheidezonen können entlang einer Förderrichtung aneinander anschließend angeordnet sein und jeweils eine Zonenbreite aufweisen.

In einem weiteren Aspekt kann das Abscheideorgan einen Rotor umfassen. Der Erntegutstrom kann mittels des Rotors im Wesentlichen helixförmig bewegbar sein.

In einem weiteren Aspekt kann das Abscheideorgan Leitelemente aufweisen. Dabei kann der Erntegutstrom mittels der Leitelemente in eine Förderrichtung entlang einer Hauptachse des Rotors leitbar sein.

Mit anderen Worten können die Leitelemente zum Lenken des Erntegutstroms verwendet werden. Die Leitelemente können dabei stromlinienförmig ausgebildet sein. Das kann heißen, dass der Erntegutstrom entlang einer Kante und/oder Fläche eines Leitelements fließen kann. Der Erntegutstrom kann mittels des Leitelemente im Wesentlichen helixförmig bewegt werden. Die Leitelemente können im Mantelbereich des Abscheideorgans angeordnet sein.

Ein Vorteil der Leitelemente kann es sein, dass der Erntegutstrom im Mantelbereich schneller in eine Förderrichtung entlang der Hauptachse des Rotors gefördert werden kann.

Des Weiteren kann eine Testvorrichtung zum Ermitteln einer Abscheidefunktion eingerichtet werden. Die Testvorrichtung kann ein Abscheideorgan und ein Sensorsystem zum Erfassen von Messwerten im Abscheideorgan umfassen. Ferner kann die Testvorrichtung eine Vielzahl von Auffangvorrichtungen zum Erfassen von mittels des Abscheideorgans abgeschiedenen Erntegut umfassen. Beispielsweise kann es sich bei den Auffangvorrichtung um Körbe handeln. Die Testvorrichtung kann eine Recheneinheit umfassen, die dazu eingerichtet und vorgesehen ist, die Abscheidefunktion basierend auf dem von der Auffangvorrichtung erfassten Ernteguts zu ermitteln.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Für den Fachmann ist ersichtlich, dass die vorgestellten Verfahren in Form von Anweisungen in Software oder auf einem Computerprogrammprodukt implementiert oder gespeichert sein können, wobei gespeicherte Anweisungen es ermöglichen, die Schritte nach dem Verfahren auszuführen, wenn eine entsprechende datenverarbeitende Maschine durch die Software gesteuert wird. Mit anderen Worten ist es möglich, dass es sich bei den Verfahren um computer-implementierte Verfahren handelt. Das heißt, es ist möglich, dass sich ein Aspekt auf ein computer-implementiertes Verfahren zum Bestimmen eines Verlusts einer Erntemaschine bezieht. Dabei können die Verfahrensschritte teilweise oder vollständig Bestandteil des computer-implementierten Verfahrens sein. Ausführungsformen beziehen sich daher auch auf ein Speichermedium mit darauf gespeicherter Software, die ausgebildet ist, um die vorgestellten Verfahren durchzuführen, wenn die Software auf einer datenverarbeitenden Einrichtung ausgeführt wird. Das Verfahren kann offline und/oder onboard (d.h. embedded und in Echtzeit) durchgeführt werden.

Weitere Vorteile und Merkmale ergeben sich aus den folgenden Ausführungsformen, die sich zum Teil auf die Figuren beziehen. Die Figuren zeigen die Ausführungsformen nicht immer maßstabsgetreu. Die Abmessungen der verschiedenen Merkmale können insbesondere zur Klarheit der Beschreibung entsprechend vergrößert oder verkleinert sein. Hierzu sind die Figuren zumindest teilweise schematisiert.

Es zeigt:

Fig. 1     eine schematische Darstellung eines Verfahrens zum Bestimmen eines Verlusts gemäß einer Ausführungsform;

Fig. 2     eine schematische Darstellung einer Erntemaschine gemäß einer Ausführungsform;

Fig. 3     eine schematische Darstellung eines Abscheideorgans mit einer Erntegutflusslinie in einer Abwicklungsansicht gemäß einer Ausführungsform;

Fig. 4     eine schematische Darstellung eines Abscheideorgans mit einer Erntegutflusslinie in einer perspektivischen Ansicht gemäß einer Ausführungsform;

Fig. 5     eine eindimensionalen Abscheidefunktion gemäß einer Ausführungsform;

Fig. 6     eine Abscheidefunktion basierend auf der Erntegutflusslinie gemäß einer Ausführungsform;

Fig. 7     Verläufe einer Entmischung und einer Trennung gemäß einer Ausführungsform;

Fig. 8     Testergebnisse im Vergleich gemäß einer Ausführungsform; und

Fig. 9     Testergebnisse im Vergleich in tabellarischer Form gemäß einer Ausführungsform.

In der folgenden Beschreibung wird auf die beigefügten Figuren verwiesen, die Teil der Offenbarung sind und bestimmte Aspekte und Ausführungsformen veranschaulichen, unter denen die vorliegende Offenbarung verstanden werden kann. Gleiche Bezugszeichen beziehen sich auf gleiche oder zumindest funktionell oder strukturell ähnliche Merkmale.

Im Allgemeinen gilt eine Offenbarung eines beschriebenen Verfahrens auch für eine entsprechende Vorrichtung zur Durchführung des Verfahrens oder ein entsprechendes System, das ein oder mehrere Vorrichtungen umfasst, und umgekehrt. Wird beispielsweise ein bestimmter Verfahrensschritt beschrieben, so kann eine entsprechende Vorrichtung ein Merkmal zur Durchführung des beschriebenen Verfahrensschrittes enthalten, auch wenn dieses Merkmal in der Abbildung nicht ausdrücklich beschrieben oder dargestellt ist. Wird dagegen beispielsweise ein bestimmtes Gerät auf der Grundlage von Funktionseinheiten beschrieben, kann ein entsprechendes Verfahren einen oder mehrere Schritte zur Durchführung der beschriebenen Funktionalität enthalten, auch wenn diese Schritte in den Abbildungen nicht explizit beschrieben oder dargestellt sind. Ähnlicherweise kann ein System entsprechende Vorrichtungsmerkmal oder Merkmale zur Durchführung eines bestimmten Verfahrensschritts umfassen. Die Merkmale der verschiedenen oben oder unten beschriebenen beispielhaften Aspekte und Ausführungsformen können kombiniert werden, sofern nicht ausdrücklich etwas anderes angegeben ist.

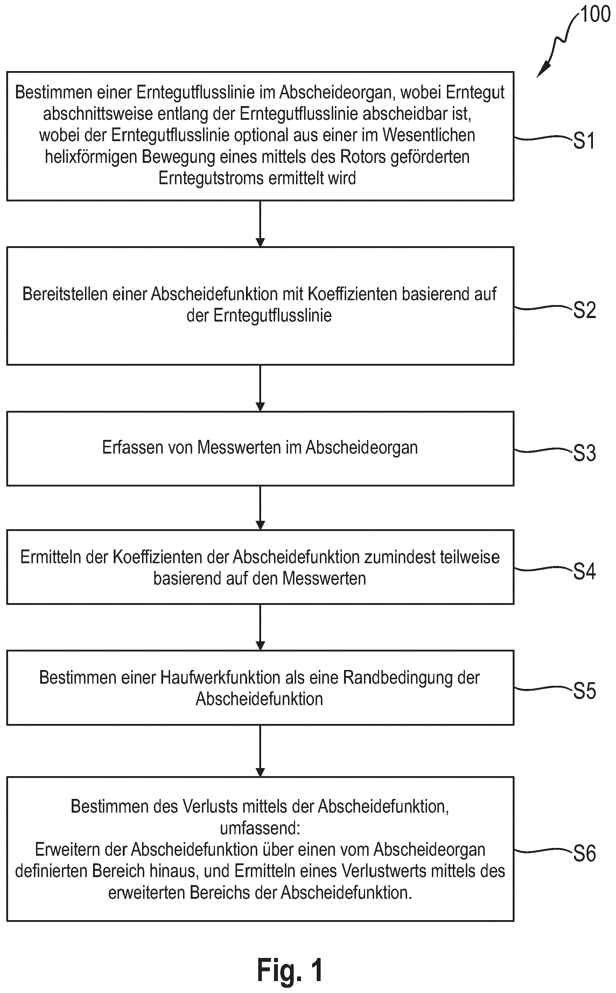

Fig. 1 zeigt eine schematische Darstellung eines Verfahrens 100 zum Bestimmen eines Verlusts gemäß einer Ausführungsform.

In einem Schritt S1 des Verfahrens kann eine Erntegutflusslinie im Abscheideorgan bestimmt werden. Dabei kann Erntegut abschnittsweise entlang der Erntegutflusslinie abscheidbar sein. Optional kann die Erntegutflusslinie dabei aus einer im Wesentlichen helixförmigen Bewegung eines mittels des Rotors geförderten Erntegutstroms ermittelt werden.

In einem weiteren Schritt S2 des Verfahrens kann einer Abscheidefunktion mit Koeffizienten basierend auf der Erntegutflusslinie bereitgestellt werden. In einem weiteren Schritt S3 kann das Erfassen von Messwerten im Abscheideorgandurchgeführt werden. In einem weiteren Schritt S4 können die Koeffizienten der Abscheidefunktion zumindest teilweise basierend auf den Messwerten ermittelt werden. In einem weiteren optionalen Schritt S5 kann eine Haufwerkfunktion als eine Randbedingung der Abscheidefunktion bestimmt werden. Die Schritte S1 bis S5 können vor dem Einsatz einer Erntemaschine durchgeführt werden. Optional können die Schritte S3 und S4 (d.h. das Erfassen der Messwerte und das Ermitteln der Koeffizienten) während des Erntevorgangs durchgeführt werden.

In einem weiteren Schritt S6, der während des Einsatzes der Erntemaschine (d.h. während des Erntevorgangs) durchgeführt werden kann, kann der Verlust mittels der Abscheidefunktion bestimmt werden. Dabei kann das Bestimmen des Verlusts ein Erweitern der Abscheidefunktion über einen vom Abscheideorgan definierten Bereich hinaus und ein Ermitteln eines Verlustwerts mittels des erweiterten Bereichs der Abscheidefunktion umfassen.

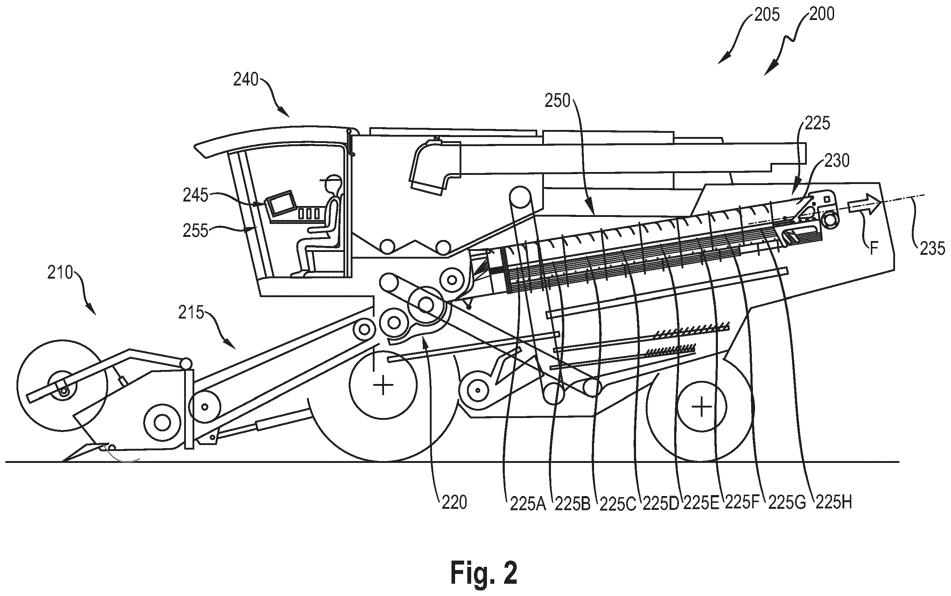

Fig. 2 zeigt eine schematische Darstellung einer Erntemaschine 200 gemäß einer Ausführungsform. Die Erntemaschine 200 ist dabei als Mähdrescher 205 ausgebildet.

Der Mähdrescher 205 kann in seinem frontseitigen Bereich ein als Schneidwerk ausgebildetes Vorsatzgerät 210 aufnehmen, welches in an sich bekannter Weise mit einem Schrägförderer 215 des Mähdreschers 205 verbunden ist. Ein den Schrägförderer 215 durchlaufender Erntegutstrom kann von dem Schrägförderer 215 an eine Dreschvorrichtung 220 des Mähdreschers übergeben werden. Von der Dreschvorrichtung 220 wird ein austretender Teilgutstrom des Erntegutstroms, der im Wesentlichen Nichtkornbestandteile wie Spreu und Stroh enthält, an ein Abscheideorgan 225 übergeben. Ein weiterer Teilgutstrom, der im Wesentlichen aus dem Erntegut abgeschiedene Körner enthält, gelangt von der Dreschvorrichtung 220 auf einen Förderboden.

Das Abscheideorgan 225 weist einen Rotor 230 auf. Mittels des Rotors 230 kann Erntegut in eine Förderrichtung F entlang einer Hauptachse 235 des Rotors 230 gefördert werden. Ferner kann der Erntegutstrom mittels des Rotors 230 im Wesentlichen helixförmig bewegbar sein.

Vom Abscheideorgan 225 kann der Teilgutstrom des Erntegutsstroms so gefördert werden, dass in dem Teilgutstrom enthaltene freibewegliche Körner im untenseitigen Bereich des Abscheideorgans 225 abgeschieden werden. Sowohl die von der Dreschvorrichtung 220 als auch durch das Abscheideorgan 225 aus dem Erntegutstrom abgeschiedenen Körner werden über einen Rücklaufboden und Förderboden einer Reinigungsvorrichtung zugeführt. Von der Reinigungsvorrichtung gelangt ein gereinigter Körnerstrom schließlich mittels einer Fördervorrichtung in einen Korntank des Mähdreschers 205.

Weiter verfügt der Mähdrescher 205 über eine Fahrerkabine 240, in der zumindest eine grafische Benutzerschnittstelle 245 angeordnet ist, welche an ein Bussystem des Mähdreschers 205 angeschlossen ist. Ein Fahrerassistenzsystem kommuniziert durch das Bussystem in an sich bekannter Weise mit der grafischen Benutzerschnittstelle 245.

Der Mähdrescher 205 umfasst ferner ein Sensorsystem 250 zum Erfassen von Messwerten im Abscheideorgan 225 und eine Auswerteeinheit 255. Das Sensorsystem 250 kann insbesondere einen Abscheideverlustsensor, einen Reinigungsverlustsensor, einen Bruchkornsensor und/oder einen Ausdruschverlustsensor umfassen.

Die Auswerteeinheit 255 kann dazu vorgesehen und eingerichtet sein, eine Erntegutflusslinie im Abscheideorgan 225 zu bestimmen, wobei Erntegut abschnittsweise entlang der Erntegutflusslinie abscheidbar ist, eine Abscheidefunktion mit Koeffizienten basierend auf der Erntegutflusslinie bereitzustellen, die Koeffizienten der Abscheidefunktion zumindest teilweise basierend auf den Messwerten zu ermitteln und einen Verlust der Erntemaschine 200 mittels der Abscheidefunktion zu bestimmen.

Das Abscheideorgan 225 ist in mehrere Abscheidezonen 225A bis 225H unterteilt. Das Sensorsystem 250 weist zum Erfassen von Messwerten einen Sensor in zumindest einer Abscheidezone 225A bis 225H auf.

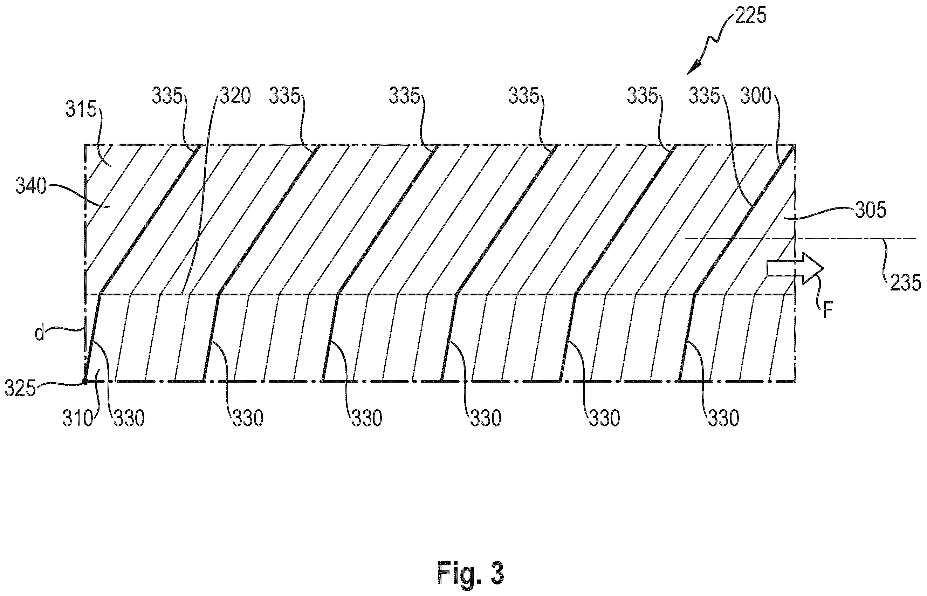

Fig. 3 zeigt eine schematische Darstellung eines Abscheideorgans 225 mit einer Erntegutflusslinie 300 in einer Abwicklungsansicht gemäß einer Ausführungsform.

Das Abscheideorgan 225 kann einen Mantel 305 umfassen, wobei der Mantel 305 den Rotor 230 umhüllt. Der Mantel 305 kann eine Trennfläche 340 umfassen, die in Fig. 3 in abgewickelter Form dargestellt ist. Eine Seite der Trennfläche 340 bildet der Mantelumfang d und eine Seite der Trennfläche 340 bildet die Mantellänge I. Ein Korbbereich 310 kann einen Teil der Trennfläche 340 des Mantels 305 bilden. Ein Mantelbereich 315 kann einen weiteren Teil der Trennfläche 340 des Mantels 305 bilden. Korbbereich 310 und Mantelbereich 315 werden beispielsweise durch eine Trennlinie 320 voneinander getrennt.

Der Korbbereich 310 kann 40 % der Trennfläche 340 des Abscheideorgans 225 bilden. Dabei kann der Mantelbereich 315 die weiteren 60 % der Trennfläche 340 bilden. Alternativ kann der Korbbereich 310 bevorzugt 30 % und besonders bevorzugt 20 % der Trennfläche 340 des Abscheideorgans 225 bilden.

Erntegut kann mittels des in Fig. 3 nicht dargestellten Rotors 230 entlang einer Förderrichtung F, die parallel zu einer Hauptachse 235 des Rotors 230 verläuft, gefördert werden. Das Erntegut bzw. ein Schwerpunkt des Ernteguts kann dabei eine im Wesentlichen helixförmige Bewegung durchlaufen, d.h. eine Bewegung, die entlang einer Spiralbahn verläuft. Der Erntegutstrom kann mittels des Rotors 230 beispielsweise im Korbbereich 310 im Wesentlichen orthogonal zur Hauptachse 235 des Rotors 235 bewegt werden. Dabei kann es sein, dass das Erntegut im Korbbereich 310 nicht bzw. nur eine geringe Strecke entlang der Hauptachse 235 des Rotors 230 gefördert wird. Dabei kann es sein, dass sich das Erntegut größtenteils radial bewegt und dabei eine Abscheidung stattfindet. Mit anderen Worten kann es sein, dass sich das Erntegut aufgrund der Abscheidung und den auftretenden mechanischen Kräften am Korb größtenteils radial zur Hauptachse 235 bewegt.

Es ist möglich, dass in einem Schritt die Erntegutflusslinie 300 aus der im Wesentlichen helixförmigen Bewegung des mittels des Rotors 230 geförderten Erntegutstroms ermittelt wird. An einem Eintritt 325 in das Abscheideorgan 225 kann eine Haufwerkfunktion verwendet werden, um eine Bedingung des Haufwerks bzw. Ernteguts zu bestimmen. Beispielsweise kann die Masse, Geschwindigkeit und Zusammensetzung des Ernteguts mittels der Haufwerkfunktion am Eintritt 325 vorgeben werden. Ferner kann die Haufwerkfunktion die Bedingungen des Ernteguts an einer gesamten Seite des Abscheideorgans 225 vorgeben.

Die Erntegutflusslinie 300 kann einer schmalen Spur durch das Abscheideorgan 225 entsprechen. Approximativ kann die Spur mit konstanten Winkeln in die jeweiligen Bereiche (Korbbereich 310 und Mantelbereich 315) gelegt werden.

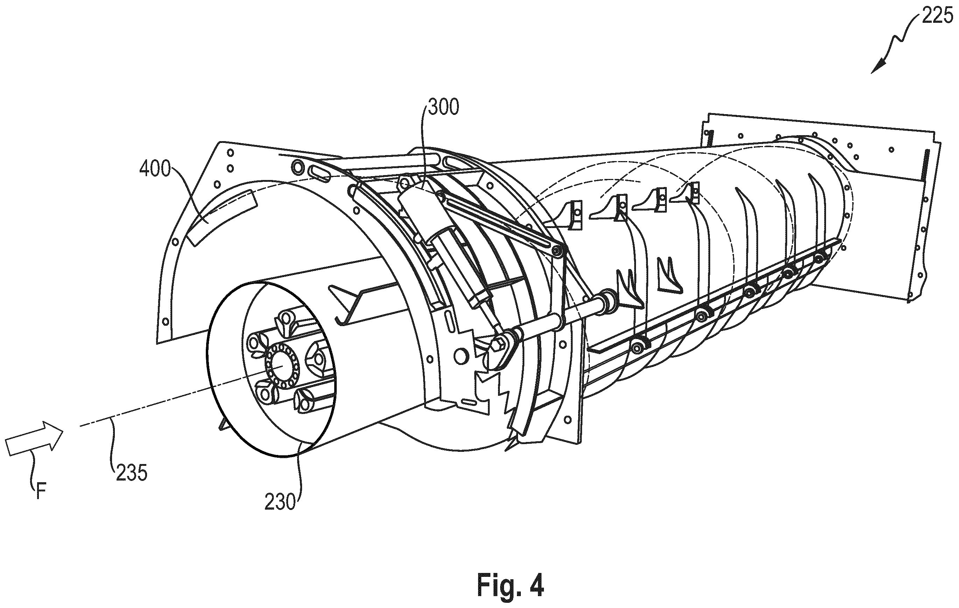

Fig. 4 zeigt eine schematische Darstellung eines Abscheideorgans 225 mit einer Erntegutflusslinie 300 in einer perspektivischen Ansicht gemäß einer Ausführungsform.

Das Abscheideorgan 225 weist Leitelemente 400 auf, wobei der Erntegutstrom mittels der Leitelemente 400 in eine Förderrichtung F entlang der Hauptachse 235 des Rotors 230 leitbar ist. Die Leitelemente 400 können dabei beispielsweise stromlinienförmig ausgebildet sein. Das kann heißen, dass der Erntegutstrom entlang einer Kante und/oder Fläche eines Leitelements 400 fließen kann. Der Erntegutstrom kann mittels der Leitelemente 400 derart beeinflusst werden, dass sich der Erntegutstrom im Wesentlichen helixförmig bewegt, wobei die Hauptachse 235 die Achse der Helix bildet. Die Erntegutflusslinie 300 kann basierend auf der im Wesentlichen helixförmigen Bewegung ermittelt werden.

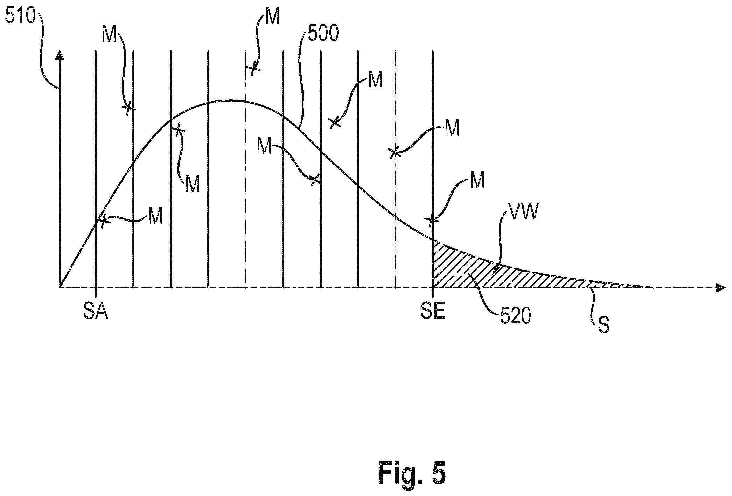

Fig. 5 zeigt eine eindimensionale Abscheidefunktion 500 gemäß einer Ausführungsform.

Die eindimensionale Abscheidefunktion 500 kann ein in Abhängigkeit von Materialeigenschaften und Maschineneinstellungen der Erntemaschine 200 exponentielles Verhalten zeigen, das mit unendlichem Abscheideweg s gegen Null läuft. Mittels der eindimensionalen Abscheidefunktion 500 kann beispielsweise eine Abscheiderate bzw. Kornrate 510 an einer Stelle des Abscheidewegs s bestimmt werden.

Die eindimensionale Abscheidefunktion 500 kann basierend auf einem analytischen Ansatz aus zwei exponentiellen Funktionen zur Beschreibung der Abscheidung in einer Dimension (d.h. des Abscheidewegs s) gebildet werden. Dabei können die beiden Prozesse Entmischung der Körner (Prozess A) und Trennung der Körner (Prozess B) auftreten, die beide mit exponentiellem Verhalten in Trennstrecke definiert wurden. Mit der Restkornfunktion R(s), die den restlichen Anteil an Körnern in beiden Prozessen zusammen zum Abscheideweg s beschreibt, und der Abscheidefunktion Z(s), die die aktuelle Abscheide-Kornrate beschreibt, sind die Funktionen wie folgt aufgestellt:

$$R(s) = \frac{1}{B-A}(Be^{-As} - Ae^{-Bs})$$

$$Z(s) = \frac{\partial}{\partial s}\frac{1-R(s)}{} = \frac{AB}{B-A}(e^{-As} - e^{-Bs})$$

Die Trennkoeffizienten A und B können dabei die entsprechende Entmischungsstärke (Prozess A) und die Trennungsstärke (Prozess B) beschreiben. Dabei wird davon ausgegangen, dass sich zu Beginn der Abscheidung alle Körner im Prozess A befinden und zunächst entmischt werden müssen. Es ist möglich, dass das Sensorsystem 250 die Messwerte M im Abscheideorgan 225 erfasst. Basierend auf den Messwerten M können Koeffizienten der Abscheidefunktion 600 ermittelt werden. Beispielsweise können die Trennkoeffizienten A und B mittels der Methode der kleinsten Fehlerquadrate ermittelt werden.

Es ist möglich, dass in einem Schritt ein Bestimmen eines Verlusts ein Erweitern der Abscheidefunktion 500 über einen vom Abscheideorgan 225 definierten Bereich hinaus umfassen. Das heißt, die Abscheidefunktion 500 kann über einen vom Abscheideorgan 225 definierten Bereich, beispielsweise über ein Abscheideende SE hinaus, extrapoliert werden. Ferner kann das Bestimmen des Verlusts ein Ermitteln eines Verlustwerts VW mittels des erweiterten Bereichs der Abscheidefunktion 500 umfassen. Dabei kann mittels des Integrals der Abscheidefunktion 500 ab dem Abscheideende SE bis ins Unendliche einen Verlustfläche 520 gebildet werden. Mittels der Verlustfläche 520 kann ein Verlustwert VW ermittelt werden. Mit anderen Worten können die Kornverluste das Integral über die Kornverluste der einzelnen Abscheidespuren über die Breite der Abscheidefläche am Ende der Abscheidung sein.

Alternativ kann die gesamte Fläche unter der Abscheidefunktion 500 mittels Integration bestimmt werden. Basierend auf der Fläche unter der Abscheidefunktion 500 kann eine mögliche Abscheidung (d.h. das gesamte potenziell zu abscheidenden Erntegut) bestimmt werden. Es kann ferner bestimmt werden, welche tatsächliche Abscheidung im Abscheideorgan 225 stattfindet, indem die Fläche unter der Abscheidefunktion 500 von einem Abscheideanfang SA bis zum Abscheideende SE bestimmt wird. Es kann ein Verlustwert VW des Abscheideorgans 225 mittels der Differenz aus der möglichen Abscheidung und der tatsächlichen Abscheidung bestimmt werden.

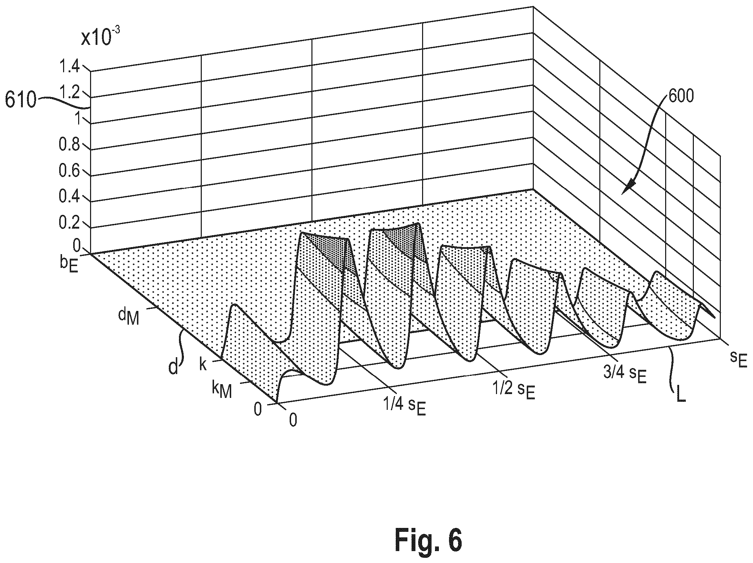

Fig. 6 zeigt eine Abscheidefunktion 600 basierend auf der Erntegutflusslinie 300 gemäß einer Ausführungsform.

Die Abscheidefunktion 600 beschreibt die Kornrate 610 (Einheit 1/m) in Abhängigkeit des Mantelumfangs d und der Mantellänge l. Dabei wurde die Abscheidefunktion 600 basierend auf der Erntegutflusslinie 300 ermittelt, indem die Bewegung des Ernteguts entlang der Erntegutflusslinie 300 berücksichtigt wurde. Ferner wurde berücksichtigt, dass Erntegut abschnittsweise entlang der Erntegutflusslinie 300 abscheidbar ist. Das Erntegut durchläuft üblicherweise abwechselnd den Korbbereich 310, in dem die Abscheidung der Körner stattfinden kann, und den Mantelbereich 315 bzw. geschlossenen Dachblechbereich, in dem das Material nur weiter entmischt wird. Im Mantelbereich 315 können die Leitelemente 400 angeordnet sein, mit denen das Erntegut bzw. die Gutmatte in axiale Richtung bewegt wird, während am Korb die Bewegung des Ernteguts nahezu tangential verlaufen kann.

Die Abscheidefunktion 600 kann gemäß der durchlaufenden Korb- und Mantelbereiche 310, 315 in mehrere Abschnitte unterteilt werden, sodass nur in den Korbbereichen 310 die Abscheidung berechnet und die Entmischung des Ernteguts über den gesamten Abscheideweg s berechnet werden kann. Da sich die Kornverteilung von Abschnitt zu Abschnitt ändern können, wurde die Abscheidefunktion 600 um eine Kornverteilung zu Beginn erweitert. Dabei können $\alpha_A$ und $\alpha_B$ Verteilungswerte sein, wobei $\alpha_A \in [0,1]$ und $\alpha_B \in [0,1]$ mit $\alpha_A + \alpha_B \leq 1$ die Verteilung der Körner in den Prozessen definieren:

$$R(s) = \alpha_B e^{-Bs} + \alpha_A \frac{1}{B-A}(Be^{-As} - Ae^{-Bs})$$

$$Z(s) = \alpha_B B e^{-Bs} + \alpha_A \frac{AB}{B-A}(e^{-As} - e^{-Bs})$$

Die Koeffizienten der Abscheidefunktion 600 können mittels Messdaten und basierend auf einer der vorhergehend beschriebenen Methoden (bspw. die Methode der kleinsten Fehlerquadrate) ermittelt werden.

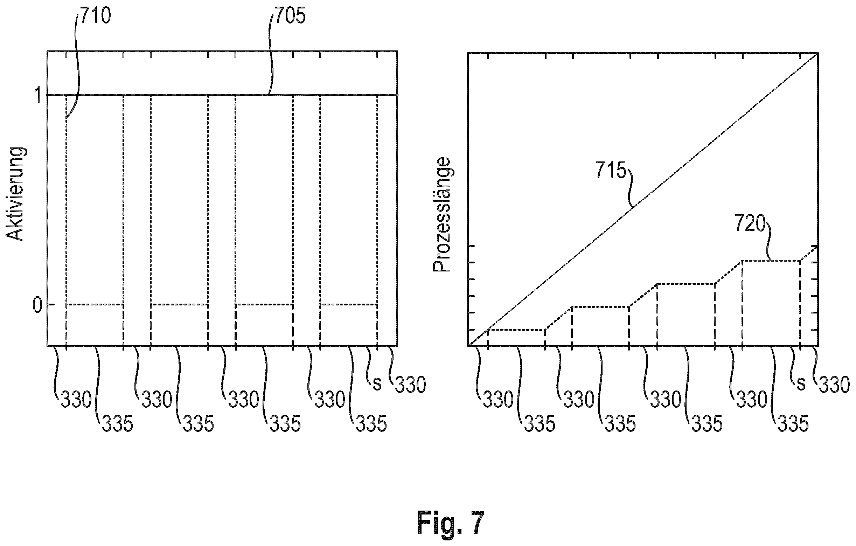

Fig. 7 zeigt Verläufe einer Entmischung und einer Trennung gemäß einer Ausführungsform. Fig. 7 zeigt auf der linken Seite den Verlauf der Aktivierung und Deaktivierung für die Entmischung 705 und die Trennung 710 über den Abscheideweg s. Durch Integration über den Abscheideweg s ergeben sich zwei unterschiedliche Längen für Entmischung und Trennung, d.h. eine Entmischungslänge 715 und eine Trennungslänge 720, die auf der rechten Seite von Fig. 7 dargestellt sind.

Der Abscheideweg s kann der Erntegutflusslinie 300 entsprechen. Ferner kann die Erntegutflusslinie 300 in Korbflussabschnitte 330 und Mantelflussabschnitte 335 unterteilt sein. Dabei kann entlang der Mantelflussabschnitte 335 eine eingeschränkte Abscheidung von Erntegut vorgegeben werden, indem die Werte der Trennung 710 in den Mantelflussabschnitten 335 null beträgt.

Fig. 7 rechts zeigt, dass die Trennungslänge 720 nur in den konkaven Rotorbereichen (d.h. in den Korbflussabschnitten 330) in gleicher Weise zunimmt, während die Entmischungslänge 715 in diesem Beispiel streng monoton linear zunimmt. In den Mantelbereichen 335 (bzw. Dachflächen) bleibt die Trennungslänge 720 konstant. Im Gegensatz zu der Aktivierungsfunktion der Trennung 710 ist die Aktivierungsfunktion der Entmischung 705 kontinuierlich.

Daraus kann sich ein Trennungsmodell-Ansatz aus einer kontinuierlichen Funktion von Summen einzelner Trennungsmodelle für alle Bereiche ergeben, jeweils basierend auf den kontinuierlichen Längenfunktionen für Entmischung und Trennung.

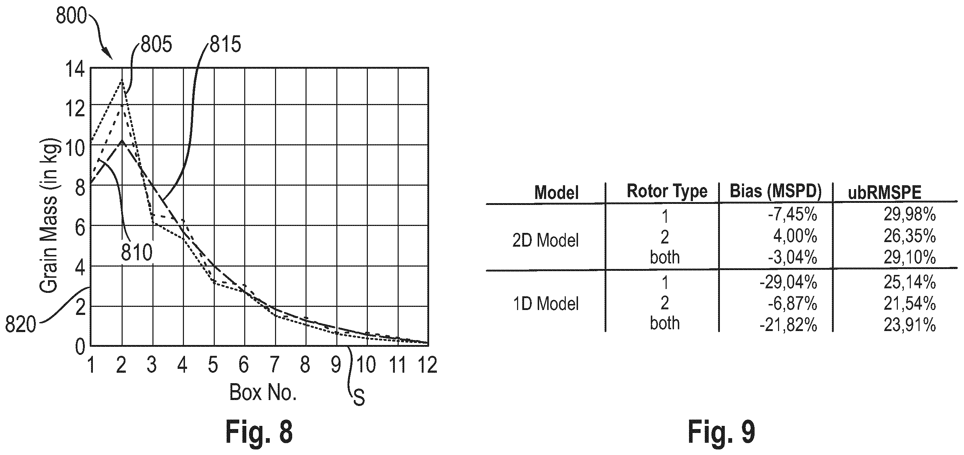

Fig. 8 zeigt Testergebnisse 800 im Vergleich gemäß einer Ausführungsform. Die Testergebnisse 800 umfassen verschiedene Verläufe bzgl. der Masse der Körner 820 abhängig vom Abscheideweg s. Dabei zeigt Fig. 8 einen Messdatenverlauf 805, die Vorhersagen 810 mittels der Abscheidefunktion 600 (d.h. ein 2D-Modell) und die Vorhersagen 815 mittels der eindimensionalen Abscheidefunktion 500 (d.h. ein 1D-Modell). Die Vorhersagen 810 mittels der Abscheidefunktion 600 ist qualitativ nahe an dem Messdatenverlauf 805 (d.h. nahe der Grundwahrheit), während die Vorhersagen 815 mittels der eindimensionalen Abscheidefunktion 500 bzgl. des Messdatenverslaufs 805 eine geringere Masse der Körner zu Beginn des Abscheidewegs s und eine zu hohe Masse der Körner zu Beginn des Abscheidewegs s vorhersagt.

Fig. 9 zeigt Testergebnisse im Vergleich in tabellarischer Form gemäß einer Ausführungsform. In Fig. 9 wird die relative Abweichung (d.h. der Bias) zwischen den Vorhersagewerten der Abscheidefunktion $\hat{y}_i$ und den Messdaten $y_i$ als Grundwahrheit durch die mittlere vorzeichenbehaftete prozentuale Abweichung (MSPD) angegeben:

$$\text{MSPD} = \frac{1}{N}\sum_{i=0}^{N}\frac{y_i - \hat{y}_i}{\hat{y}_i}$$

Der unverzerrte mittlere quadratische Fehler in Prozent (ubRMSPE) kann folgendermaßen vorgegeben sein:

$$\text{ubRMSPE} = \sqrt{\frac{1}{N}\sum_{i=0}^{N}\left(\frac{y_i - \hat{y}_i}{\hat{y}_i}\right)^2 - \text{MSPD}^2}$$

Eine positive Abweichung (MSPD) bedeutet eine Unterschätzung, während eine negative Verzerrung eine Überschätzung der Abscheidefunktion darstellt. Es wurden Schätzungen für zwei verschieden Rotortypen (Rotortyp 1 und Rotortyp 2) durchgeführt.

Ein wichtiger Unterschied zwischen der Abscheidefunktion 600 und der eindimensionalen Abscheidefunktion 500 ist die Abweichung. Die Abscheidefunktion 600 liegt nahe bei null, wobei ein Rotortyp leicht überschätzt und der andere unterschätzt wird. Während die eindimensionale Abscheidefunktion 500 mit dem Rotortyp 2 überwiegend übereinstimmt, wurde der Rotortyp 1 überschätzt. Dennoch zeigen beide Abscheidefunktionen 500, 600 mit beiden Rotoren im Durchschnitt eine Überschätzung.

Die Abscheidefunktion 600 hat hierin den Vorteil, dass sie die Rotorgeometrie und die Erntegutflusslinie 300 einbezieht. Dies führt zu einer relativen Abweichung nahe null, während die eindimensionale Abscheidefunktion 500 eine Überschätzung aufweist. Für die eindimensionale Abscheidefunktion 500 muss ein Kalibrierungsfaktor ermittelt werden, der den Rotorumfang und das Verhältnis zwischen der konkaven Fläche und der Dachfläche einschließt.

**Bezugszeichenliste**

| 100 | Verfahren |
| S1-S6 | Schritte |

| 200 | Erntemaschine |
| 205 | Mähdrescher |
| 210 | Vorsatzgerät |
| 215 | Schrägförderer |
| 220 | Dreschvorrichtung |
| 225 225A- | Abscheideorgan |
| 225H | Abscheidezonen |
| 230 | Rotor |
| 235 | Hauptachse |
| 240 | Fahrerkabine |
| 245 | grafische Benutzerschnittstelle |
| 250 | Sensorsystem |
| 255 | Auswerteeinheit |

| 300 | Erntegutflusslinie |
| 305 | Mantel |
| 310 | Korbbereich |
| 315 | Mantelbereich |
| 320 | Trennlinie |
| 325 | Eintritt |
| 330 | Korbflussabschnitte |
| 335 | Mantelflussabschnitte |
| 340 | Trennfläche |

| 400 | Leitelement |

| 500 | eindimensionale Abscheidefunktion |

| 510 | Kornrate |
| 520 | Verlustfläche |

| 600 | Abscheidefunktion |
| 610 | Kornrate |

| 705 | Aktivierung und Deaktivierung für die Entmischung |
| 710 | Aktivierung und Deaktivierung für die Trennung |
| 715 | Entmischungslänge |
| 720 | Trennungslänge |

| 800 | Testergebnisse |
| 805 | Messdatenverlauf |
| 810 | Vorhersagen mittels der Abscheidefunktion 600 |
| 815 | Vorhersagen mittels der eindimensionalen Abscheidefunktion 500 |

| F | Förderrichtung |
| M | Messwerte |
| VW | Verlustwert |
| s | Abscheideweg |
| $s_E$ | Abscheideende |
| d | Mantelumfang |
| l | Mantellänge |

**Patentansprüche**

1. Verfahren (100) zum Bestimmen eines Verlusts einer Erntemaschine (200), wobei die Erntemaschine (200) ein Abscheideorgan (225) umfasst, das Verfahren umfassend:

   Bestimmen einer Erntegutflusslinie (300) im Abscheideorgan (225),
   wobei Erntegut abschnittsweise entlang der Erntegutflusslinie (300) abscheidbar ist,
   Bereitstellen einer Abscheidefunktion (600) mit Koeffizienten basierend auf der Erntegutflusslinie (300),
   Erfassen von Messwerten (M) im Abscheideorgan (225),
   Ermitteln der Koeffizienten der Abscheidefunktion (600) zumindest teilweise basierend auf den Messwerten (M), und
   Bestimmen des Verlusts mittels der Abscheidefunktion (600).

2. Verfahren (100) nach Anspruch 1, wobei die Erntegutflusslinie (300) in Korbflussabschnitte (330) und Mantelflussabschnitte (335) unterteilt ist, wobei entlang der Mantelflussabschnitte (335) eine eingeschränkte Abscheidung von Erntegut vorgegeben wird.

3. Verfahren (100) nach Anspruch 1 oder 2, wobei das Abscheideorgan (225) in mehrere Abscheidezonen (225A-225H) unterteilt ist und das Verfahren (100) umfassend:
Erfassen von Messwerten (M) in zumindest einer Abscheidezone (225A-225H) des Abscheideorgans (225).

4. Verfahren (100) nach einem der vorhergehenden Ansprüche,

wobei das Abscheideorgan (225) einen Rotor (230) umfasst und
wobei das Bestimmen der Erntegutflusslinie (300) umfasst:
Ermitteln der Erntegutflusslinie (300) aus einer im Wesentlichen helixförmigen Bewegung eines mittels des Rotors (230) geförderten Erntegutstroms.

5. Verfahren (100) nach Anspruch 4,
wobei beim Ermitteln der Erntegutflusslinie (300) berücksichtigt wird, dass sich der Erntegutstrom abschnittsweise im Wesentlichen orthogonal zu einer Hauptachse (235) des Rotors (230) bewegt.

6. Verfahren (100) nach einem der vorhergehenden Ansprüche,

wobei die Abscheidefunktion (600) Trennkoeffizienten (A, B) und Verteilungswerte ($\alpha_A$, $\alpha_B$) aufweist und
wobei die Verteilungswerte ($\alpha_A$, $\alpha_B$) und die Trennkoeffizienten (A, B) zumindest teilweise basierend auf den Messwerten (M) ermittelt werden.

7. Verfahren (100) nach einem der vorhergehenden Ansprüche,
wobei das Bestimmen des Verlusts umfasst:

Erweitern der Abscheidefunktion (600) über einen vom Abscheideorgan (225) definierten Bereich hinaus, und
Ermitteln eines Verlustwerts (VW) mittels des erweiterten Bereichs der Abscheidefunktion (600).

8. Verfahren (100) nach einem der vorhergehenden Ansprüche,
das Verfahren umfassend:
Bestimmen einer Haufwerkfunktion als eine Randbedingung der Abscheidefunktion (600).

9. Erntemaschine (200), umfassend:

ein Abscheideorgan (225);
ein Sensorsystem (250) zum Erfassen von Messwerten (M) im Abscheideorgan (225);
eine Auswerteeinheit (255), die dazu vorgesehen und eingerichtet ist,

eine Erntegutflusslinie (300) im Abscheideorgan (225) zu bestimmen, wobei Erntegut abschnittsweise entlang der Erntegutflusslinie (300) abscheidbar ist, eine Abscheidefunktion (600) mit Koeffizienten basierend auf der Erntegutflusslinie (300) bereitzustellen,
die Koeffizienten der Abscheidefunktion (600) zumindest teilweise basierend auf den Messwerten (M) zu ermitteln, und
einen Verlust der Erntemaschine (200) mittels der Abscheidefunktion (600) zu bestimmen.

10. Erntemaschine (200) nach Anspruch 9,

wobei das Abscheideorgan (225) einen Korbbereich (310) und/oder einen Mantelbereich (315) umfasst,
wobei die Erntegutflusslinie (300) im Korbbereich (310) in Korbflussabschnitte (330) und im Mantelbereich (315) in Mantelflussabschnitte (335) unterteilt ist, wobei entlang der Mantelflussabschnitte (335) eine eingeschränkte Abscheidung von Erntegut vorgegeben ist.

11. Erntemaschine (200) nach Anspruch 10,
wobei der Korbbereich (310) 40 %, bevorzugt 30 %, besonders bevorzugt 20 %, einer Trennfläche (340) des Abscheideorgans (225) bildet.

12. Erntemaschine (200) nach Anspruch 9 bis 11,

wobei das Abscheideorgan (225) in mehrere Abscheidezonen (225A-225H) unterteilt ist und wobei das Sensorsystem (250) zum Erfassen von Messwerten (M) einen Sensor in zumindest einer Abscheidezone (225A-225H) aufweist.

13. Erntemaschine (200) nach Anspruch 9 bis 12,
wobei das Abscheideorgan (225) einen Rotor (230) umfasst und der Erntegutstrom mittels des Rotors (230) im Wesentlichen helixförmig bewegbar ist.

14. Erntemaschine (200) nach Anspruch 13,
wobei das Abscheideorgan (225) Leitelemente (400) aufweist, wobei der Erntegutstrom mittels der Leitelemente (400) in eine Förderrichtung (F) entlang einer Hauptachse (235) des Rotors (230) leitbar ist.

100

Bestimmen einer Erntegutflusslinie im Abscheideorgan, wobei Erntegut abschnittsweise entlang der Erntegutflusslinie abscheidbar ist, wobei der Erntegutflusslinie optional aus einer im Wesentlichen helixförmigen Bewegung eines mittels des Rotors geförderten Erntegutstroms ermittelt wird — S1

Bereitstellen einer Abscheidefunktion mit Koeffizienten basierend auf der Erntegutflusslinie — S2

Erfassen von Messwerten im Abscheideorgan — S3

Ermitteln der Koeffizienten der Abscheidefunktion zumindest teilweise basierend auf den Messwerten — S4

Bestimmen einer Haufwerkfunktion als eine Randbedingung der Abscheidefunktion — S5

Bestimmen des Verlusts mittels der Abscheidefunktion, umfassend:
Erweitern der Abscheidefunktion über einen vom Abscheideorgan definierten Bereich hinaus, und Ermitteln eines Verlustwerts mittels des erweiterten Bereichs der Abscheidefunktion. — S6

## Fig. 1

Fig. 2

EP 4 702 831 A1

**Fig. 3**

Fig. 4

Fig. 5

**Fig. 6**

EP 4 702 831 A1

Fig. 7

EP 4 702 831 A1

Fig. 8

| Model | Rotor Type | Bias (MSPD) | ubRMSPE |
|---|---|---|---|
| | 1 | -7,45% | 29,98% |
| 2D Model | 2 | 4,00% | 26,35% |
| | both | -3,04% | 29,10% |
| | 1 | -29,04% | 25,14% |
| 1D Model | 2 | -6,87% | 21,54% |
| | both | -21,82% | 23,91% |

Fig. 9

EP 4 702 831 A1

Europäisches
Patentamt

European
Patent Office

Office européen
des brevets

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 4 151 072 A1 (CLAAS SELBSTFAHRENDE ERNTEMASCHINEN GMBH [DE]) 22. März 2023 (2023-03-22) * Abbildungen 1-4 * * Absätze [0009], [0072] * ----- | 1-14 | INV. A01D41/127 |
| X | GUO DAFANG ET AL: "Digital twin for monitoring threshing performance of combine harvesters", MEASUREMENT, INSTITUTE OF MEASUREMENT AND CONTROL. LONDON, GB, Bd. 239, 29. Juli 2024 (2024-07-29), XP087629116, ISSN: 0263-2241, DOI: 10.1016/J.MEASUREMENT.2024.115411 [gefunden am 2024-07-29] * Abbildungen 1, 2, 7, 10 * * Abschnitte 1 und 2.2.1 * ----- | 1-14 | |
| X | US 4 360 998 A (SOMES RICHARD K) 30. November 1982 (1982-11-30) * Abbildungen 1-7 * * Anspruch 2 * ----- | 1-14 | RECHERCHIERTE SACHGEBIETE (IPC) A01D |

Der vorliegende Recherchenbericht wurde für alle Patentansprüche erstellt

| Recherchenort | Abschlußdatum der Recherche | Prüfer |
|---|---|---|
| München | 1. Dezember 2025 | Holtermann, Timm |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                EP 25 18 7272

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-12-2025

| Im Recherchenbericht angeführtes Patentdokument | Datum der Veröffentlichung | Mitglied(er) der Patentfamilie | Datum der Veröffentlichung |
|---|---|---|---|
| EP 4151072 A1 | 22-03-2023 | DE 102021124214 A1 | 23-03-2023 |
| | | EP 4151072 A1 | 22-03-2023 |
| US 4360998 A | 30-11-1982 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1321023 B1